# EUROPÄISCHE PATENTSCHRIFT

(11) **EP 0 519 304 B1**
(45) Veröffentlichungstag und Bekanntmachung des Hinweises auf die Patenterteilung: **13.03.1996**
(21) Anmeldenummer: 92109704.4
(22) Anmeldetag: 09.06.1992
(51) Int. Cl.: F02C 7/14, F02C 3/30

(54) **Verfahren und Anlage zum Betreiben einer Gasturbine**
Method and device to improve a gas turbine system
Méthode et dispositif pour améliorer un système de turbine à gaz

(30) Priorität: 21.06.1991 DE 4120595
(43) Veröffentlichungstag der Anmeldung: 23.12.1992
(73) Patentinhaber: SIEMENS AKTIENGESELLSCHAFT, D-80333 München (DE)
(72) Erfinder: Finckh, Hermann, Dr., W-8500 Nürnberg 90 (DE); Rukes, Bert, Dr., W-8520 Erlangen (DE); Fröhlich, Günter, Dipl.-Ing. (FH), W-4330 Mülheim (DE)

(56) Entgegenhaltungen:
- EP-A- 0 379 880
- DE-C- 639 868
- FR-A- 1 110 604
- GB-A- 899 312
- GB-A- 2 034 822
- GB-A- 2 236 145
- US-A- 5 095 693

## Beschreibung

Die Erfindung betrifft ein Verfahren zum Betreiben einer Gasturbine bei einer hohen Temperatur des arbeitsleistend entspannten Arbeitsmittels, wobei ein Teil der zur Erzeugung des Arbeitsmittels verwendeten verdichteten Luft als Kühlluft für die Gasturbine verwendet wird und bei dem die Kühlluft vor Eintritt in die Gasturbine durch indirekten Wärmetausch mit einem Zusatzmedium gekühlt wird. Sie richtet sich weiter auf eine Anlage zur Durchführung des Verfahrens.

Eine derartige Gasturbine wird üblicherweise zur Erzeugung elektrischer Energie eingesetzt. Zur Steigerung der Leistungsfähigkeit der Gasturbine ist es möglich, entweder den Massendurchsatz durch die Gasturbine oder die Temperatur des Arbeitsmittels vor dessen Eintritt in die Gasturbine zu erhöhen. Die erstgenannte Möglichkeit führt allerdings in unerwünschter Weise zu großen Strömungsquerschnitten und Strömungsgeschwindigkeiten sowohl in der Gasturbine als auch in einem dieser vorgeschalteten Luftverdichter. Der zweiten Möglichkeit stehen Werkstoffprobleme, insbesondere in bezug auf die Hitzebeständigkeit der Turbinenschaufeln, entgegen.

Aus der Druckschrift "Gasturbinen" von F. Dietzel, 1974, Seiten 57 bis 60, ist es bekannt, daß eine Steigerung der Temperatur des Arbeitsmittels dann zugelassen werden kann, wenn die Turbinenschaufeln so weit gekühlt werden, daß sie stets eine unterhalb der zulässigen Werkstofftemperatur liegende Temperatur aufweisen. Dabei steht als Kühlmittel Luft zur Verfügung, die dem Luftverdichter entnommen wird. Allerdings wird die Luft aufgrund der Kompression im Luftverdichter auf ca. 150 bis 200 °C erwärmt, so daß die Kühlwirkung dieser Kühlluft nur begrenzt ist. Um eine ausreichende Kühlwirkung zu erreichen, ist daher eine große Menge an Kühlluft erforderlich. Dies wiederum hat zur Folge, daß der erzielte Wirkungsgrad nur begrenzt ist.

Aus der Druckschrift GB-A-2 034 822 ist es darüber hinaus bekannt, zur Kühlung der Kühlluft einer Gasturbine eine in einem geschlossenen Kreislauf geführtes Wasser-Dampf-Gemisch zu verwenden. Zudem ist es aus der Druckschrift GB-A-899 312 bekannt, bei Verwendung eines Tieftemperaturbrennstoffs zur Verbrennung in der Gasturbine diesen zur Kühlluftkühlung heranzuziehen.

Der Erfindung liegt daher die Aufgabe zugrunde, ein Verfahren der eingangs genannten Art derart weiterzubilden, daß mit einfachen Mitteln bei einer ausreichenden Kühlung der Gasturbine ein möglichst hoher Wirkungsgrad erreicht wird. Weiterhin soll eine Gasturbinen-Anlage angegeben werden, die neben ausreichender Kühlung einen hohen Wirkungsgrad aufweist.

Bezüglich des Verfahrens wird diese Aufgabe erfindungsgemäß dadurch gelöst, daß das durch den Wärmetausch wenigstens teilweise verdampfte Zusatzmedium durch indirekten Wärmetausch mit dem Abgas aus der Gasturbine zusätzlich erhitzt und zum Erzeugen des Arbeitsmittels herangezogen wird.

Das die Gasturbine verlassende Abgas kann außerdem zur Erzeugung von Fernwärme oder Prozeßwärme, z. B. zur Versorgung von Fernnetzen bzw. Industrieanlagen, genutzt werden.

Bezüglich der Anlage, bei der der Gasturbine eine Brennkammer sowie der Brennkammer ein Luftverdichter zugeordnet sind, wird die gestellte Aufgabe erfindungsgemäß gelöst durch eine an die Brennkammer angeschlossene Flüssigkeits-Dampf-Leitung, in die ein erster Wärmetauscher sekundärseitig geschaltet ist, der primärseitig in eine den Luftverdichter und die Gasturbine verbindende Kühlluftleitung geschaltet ist, wobei der Gasturbine abgasseitig ein zweiter Wärmetauscher primärseitig nachgeschaltet ist, der sekundärseitig in die Flüssigkeits-Dampf-Leitung geschaltet ist.

Zum Eindüsen von für die Erzeugung des Arbeitsmittels bereitzustellendem Dampf in die Brennkammer ist vorteilhafterweise die Flüssigkeits-Dampf-Leitung an die Brennkammer der Gasturbine angeschlossen.

Zur Erzeugung von Dampf für eine Dampfturbine oder zur Auskopplung von Fern- oder Prozeßwärme kann der Gasturbine abgasseitig ein Abhitzekessel nachgeschaltet sein, der sekundärseitig in einen Wasser-Dampf-Kreislauf geschaltet ist.

Die mit der Erfindung erzielten Vorteile bestehen insbesondere darin, daß einerseits durch die Abkühlung mittels der Kühlluft eine gute Kühlwirkung erzielt wird, wobei nur eine relativ geringe Luftmenge vom Verdichter bereitgestellt werden muß. Andererseits wird dadurch und durch die Ausnutzung der dabei freiwerdenden Wärme zur Erzeugung von Dampf, vorzugsweise für den Gasturbinenprozeß selbst, ein besonders hoher Gesamtwirkungsgrad erzielt.

Ein Ausführungsbeispiel der Erfindung wird anhand einer Zeichnung näher erläutert. Sie zeigt in einer schematischen Darstellung eine Gasturbinenanlage mit einem in eine Kühlluftleitung geschalteten Wärmetauscher.

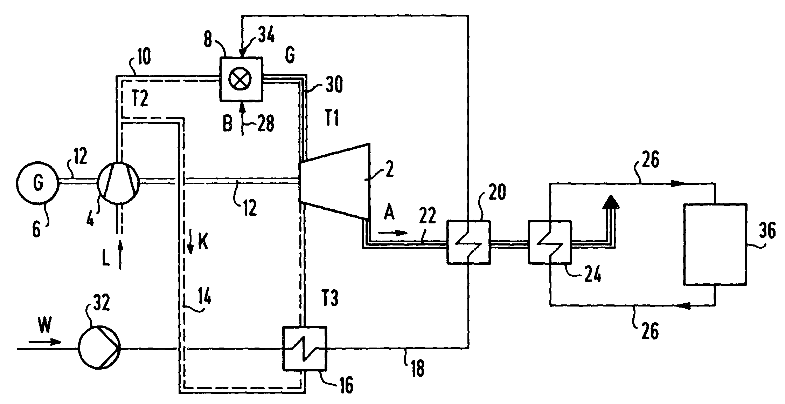

Die Gasturbinenanlage gemäß der Figur umfaßt eine Gasturbine 2 mit angekoppeltem Luftverdichter 4 und Generator 6 sowie eine der Gasturbine 2 vorgeschaltete Brennkammer 8, die an eine vom Luftverdichter 4 kommende Frischluftleitung 10 angeschlossen ist. Der Luftverdichter 4 und der Generator 6 sitzen auf einer gemeinsamen Welle 12, die von der Gasturbine 2 angetrieben wird.

Auf der Druckseite des Luftverdichters 4 ist an die Frischluftleitung 10 eine Kühlluftleitung 14 angeschlossen, die in die Gasturbine 2 mündet. In die Kühlluftleitung 14 ist ein Wärmetauscher oder Kühlluftkühler 16 primärseitig eingeschaltet.

Der Wärmetauscher 16 ist sekundärseitig in eine Flüssigkeits-Dampf-Leitung 18 geschaltet, die in die Brennkammer 8 mündet. In die Flüssigkeits-Dampf-Leitung 18 ist außerdem ein weiterer Wärmetauscher oder Dampferzeuger 20 sekundärseitig geschaltet, der primärseitig in die Abgasleitung 22 der Gasturbine 2 geschaltet ist.

In die Abgasleitung 22 ist außerdem ein Abhitzekessel 24 primärseitig eingeschaltet, der sekundärseitig in einen Wasser-Dampf-Kreislauf 26 mit Verbraucher 36 geschaltet ist.

Beim Betrieb der Gasturbinenanlage wird der Brennkammer 8 über eine Brennstoffleitung 28 Brennstoff B, z.B. Kohle, zugeführt. Der Brennstoff B wird in der Brennkammer 8 mit der verdichteten, auf einer Temperatur T2 befindlichen Frischluft L aus dem Luftverdichter 4 verbrannt. Das bei der Verbrennung entstehende heiße Rauchgas oder Arbeitsmittel G wird über eine Rauchgasleitung 30 in die Gasturbine 2 geleitet. Dort entspannt sich das Arbeitsmittel G und treibt dabei die Gasturbine 2 an. Diese wiederum treibt den Luftverdichter 4 und den Generator 6 an. Das Rauchgas G kann bei Eintritt in die Gasturbine 2 eine hohe Temperatur T1, insbesondere von mehrmals 1000° C, aufweisen.

Zur Kühlung der Gasturbine 2, insbesondere der Turbinenschaufeln, wird ein Teil der verdichteten Frischluft L als Kühlluft K über die Kühlluftleitung 14 der Gasturbine 2 zugeführt. Die Frischluft L wird im Luftverdichter 4 aufgrund der Kompression auf eine Temperatur T2 von ca. 150 bis 200° C erwärmt, so daß auch die Kühlluft K diese Temperatur T2 beim Eintritt in den Wärmetauscher 16 aufweist. Im Wärmetauscher 16 wird die Kühlluft K auf eine Temperatur T3, die bevorzugt unter 100° C liegt, abgekühlt. Die dabei freiwerdende Wärme wird im Wärmetauscher 16 an ein durch die Flüssigkeits-Dampf-Leitung 18 strömendes Zusatzmedium W, z.B. Deionat, abgegeben und heizt dieses dabei auf. Dazu wird das Zusatzmedium W über eine Pumpe 32 in die Flüssigkeits-Dampf-Leitung 18 eingespeist.

Das vorgewärmte oder aufgeheizte Zusatzmedium W wird im Wärmetauscher oder Dampferzeuger 20 weiter erhitzt und - wie durch den Pfeil 34 angedeutet - in die Brennkammer 8 eingedüst. Gleichzeitig wird im Wärmetauscher 20 das über die Abgasleitung 22 aus der Gasturbine 2 abströmende heiße Abgas A abgekühlt.

Eine weitere Abkühlung des Abgases A erfolgt im Abhitzekessel 24. Dabei wird das im Wasser-Dampf-Kreislauf 26 bereitgestellte Wasser erhitzt und verdampft. Die dabei anfallende Wärme kann in nicht näher dargestellter Art und Weise in ein Fernheiznetz als Verbraucher 36 eingespeist werden. Der im Wasser-Dampf-Kreislauf 26 erzeugte Dampf kann auch zum Betreiben einer Dampfturbinenanlage herangezogen werden. Es ist auch möglich, die im Abhitzekessel 24 erzeugte Wärme als Prozeßwärme für eine Industrieanlage zu nutzen.

Die bei der Kühlung der Kühlluft K im Wärmetauscher 16 anfallende Wärme kann auch zur Erzeugung von Dampf für die genannte, als Verbraucher 36 eingesetzte Dampfturbinenanlage verwendet werden. Dazu wird der Wärmetauscher 16 in nicht näher dargestellter Weise sekundärseitig, z.B. als Vorwärmer, in den Wasser-Dampf-Kreislauf 26 geschaltet.

## Patentansprüche

1. Verfahren zum Betreiben einer Gasturbine (2) bei einer hohen Temperatur (T1) des arbeitsleistend entspannten Arbeitsmittels (G), wobei ein Teil der zur Erzeugung des Arbeitsmittels (G) verwendeten verdichteten Luft (L) als Kühlluft (K) für die Gasturbine (2) verwendet wird, bei dem die Kühlluft (K) vor Eintritt in die Gasturbine (2) durch indirekten Wärmetausch mit einem Zusatzmedium (W) gekühlt wird,
**dadurch gekennzeichnet,** daß das durch den Wärmetausch wenigstens teilweise verdampfte und durch einen indirekten Wärmetausch mit dem Abgas (A) aus der Gasturbine (2) zusätzlich erhitzte Zusatzmedium (W) zum Erzeugen des Arbeitsmittels (G) herangezogen wird.

2. Verfahren nach Anspruch 1,
**dadurch gekennzeichnet,** daß das die Gasturbine (2) verlassende Abgas (A) zur Erzeugung von Fernoder Prozeßwärme genutzt wird.

3. Anlage zum Betreiben einer Gasturbine (2) bei einer hohen Temperatur (T1) des arbeitsleistend entspannten Arbeitsmittels (G), wobei ein Teil der zur Erzeugung des Arbeitsmittels (G) verwendeten verdichteten Luft (L) als Kühlluft (K) für die Gasturbine (2) verwendet wird, insbesondere zur Durchführung des Verfahrens nach Anspruch 1 oder 2, wobei der Gasturbine (2) eine Brennkammer (8) sowie der Brennkammer (8) ein Luftverdichter (4) zugeordnet sind,
**gekennzeichnet durch** eine an die Brennkammer (8) angeschlossene Flüssigkeits-Dampf-Leitung (18), in die ein erster Wärmetauscher (16) sekundärseitig geschaltet ist, der primärseitig in eine den Luftverdichter (4) und die Gasturbine (2) verbindende Kühlluftleitung (14) geschaltet ist, wobei der Gasturbine (2) abgasseitig ein zweiter Wärmetauscher (20) primärseitig nachgeschaltet ist, der sekundärseitig in die Flüssigkeits-Dampf-Leitung (18) geschaltet ist.

4. Anlage nach Anspruch 3,
**dadurch gekennzeichnet,** daß die Flüssigkeits-Dampf-Leitung (18) an die Brennkammer (8) der Gasturbine (2) angeschlossen ist.

5. Anlage nach Anspruch 3 oder 4,
**dadurch gekennzeichnet,** daß die Flüssigkeits-Dampf-Leitung (18) mit Deionat beaufschlagt ist.

6. Anlage nach einem der Ansprüche 3 bis 5,
**dadurch gekennzeichnet,** daß der Gasturbine (2) abgasseitig ein Abhitzekessel (24) nachgeschaltet ist, der sekundärseitig in einen Wasser-Dampf-Kreislauf (26) geschaltet ist.

## Claims

1. Method for operating a gas turbine (2) at a high temperature (T1) of the operating medium (G) which is expanded to perform work, wherein a portion of the compressed air (L) used to generate the operating medium (G) is used as cooling air (K) for the gas turbine (2), where the cooling air (K) is cooled before entry into the gas turbine (2) by way of indirect heat exchange with an additional medium (W), characterized in that the additional medium (W) which is at least partially evaporated by the heat exchange and is additionally heated by an indirect heat exchange with the exhaust gas (A) from the gas turbine (2) is used for the generation of the operating medium (G).

2. Method according to claim 1, characterized in that the exhaust gas (A) leaving the gas turbine (2) is used for the generation of remote heat or process heat.

3. Installation for the operation of a gas turbine (2) at a high temperature (T1) of the operating medium (G) which is expanded to perform work, wherein a portion of the compressed air (L) used to generate the operating medium (G) is used as cooling air (K) for the gas turbine (2), in particular for carrying out the method according to claim 1 or 2, wherein there is associated with the gas turbine (2) a combustion chamber (8) and with the combustion chamber (8) an air compressor (4), characterized by a liquid- steam conduit (18) connected to the combustion chamber (8), into which conduit a first heat exchanger (16) is connected on the secondary side, which is connected on the primary side into a cooling-air conduit (14) connecting the air compressor (4) and the gas turbine (2), wherein downstream of the gas turbine (2) on the exhaust-gas side is a second heat exchanger (20) on the primary side, which second heat exchanger (20) is connected on the secondary side into the liquid-steam conduit (18).

4. Installation according to claim 3, characterized in that the liquid-steam conduit (18) is connected to the combustion chamber (8) of the gas turbine (2).

5. Installation according to claim 3 or 4, characterized in that the liquid-steam conduit (18) is loaded with deionized water.

6. Installation according to one of claims 3 to 5, characterized in that downstream of the gas turbine (2) on the exhaust-gas side is a waste-heat boiler (24), which is connected on the secondary side into a water-steam loop (26).

## Revendications

1. Procédé pour faire fonctionner une turbine à gaz (2), alors que le fluide de travail (G), détendu et fournissant du travail, a une température (T1) haute, une partie de l'air comprimé (L), qui est utilisé pour produire le fluide de travail (G), étant utilisée comme air de refroidissement (K) pour la turbine à gaz (2), l'air de refroidissement (K) étant refroidi, avant de pénétrer dans la turbine à gaz (2), par un échange de chaleur indirect avec un fluide supplémentaire (W) , caractérisé par le fait que le fluide supplémentaire (w), et qui est évaporé partiellement au moins par l'échange de chaleur et qui est chauffé supplémentairement par un échange de chaleur indirect avec le gaz sortant de la turbine à gaz, est utilisé pour produire le fluide de travail (G).

2. Procédé selon la revendication 1, caractérisé par le fait que le gaz (A) sortant de la turbine à gaz (2), est utilisé pour produire de la chaleur à utilisation urbaine ou de la chaleur de processus.

3. Installation pour la mise en oeuvre d'une turbine à gaz (3), à haute température (T1) du fluide de travail détendu (G) et fournissant du travail, une partie de l'air comprimé (L), utilisé pour produire le fluide de travail (G), étant utilisée comme air de refroidissement (K) pour la turbine à gaz (2), en particulier pour la mise en oeuvre du procédé selon la revendication 1 ou 2, une chambre de combustion (8) étant associée à la turbine à gaz (2) et un compresseur d'air (4) étant associé à la chambre de combustion (8), caractérisée par le fait qu'à la chambre de combustion (8) est reliée une conduite liquide-vapeur (18), dans laquelle est monté, côté secondaire, un premier échangeur de chaleur (16) et qui est relié, côté primaire, à une conduite d'air de refroidissement (14) qui relie le compresseur d'air (4) et la turbine à gaz (2), alors qu'en aval de la turbine à gaz (2), et côté sortie des gaz, est monté, côté primaire, un second échangeur de chaleur (20), qui, côté secondaire, est relié à la conduite liquide-vapeur (18).

4. Installation selon la revendication 3, caractérisée par le fait que la conduite liquide-air (18) est reliée à la chambre de combustion (8) de la turbine à gaz (2).

5. Installation selon la revendication 3 ou 4, caractérisée par le fait que la conduite liquide-vapeur (18) est alimentée en un produit désionisé.

6. Installation selon l'une des revendications 3 à 5, caractérisée par le fait qu'en aval de la turbine à gaz (2), et côté sortie des gaz, est montée une chaudière de récupération (24) qui, côté secondaire, est reliée au circuit eau-vapeur (26).
